# EUROPEAN PATENT SPECIFICATION

(11) **EP 0 635 652 B1**
(45) Date of publication and mention of the grant of the patent: **15.09.1999**
(21) Application number: 94111155.1
(22) Date of filing: 18.07.1994
(51) Int. Cl.: F16D 13/58

(54) **Clutch diaphragm spring**
Kupplungstellerfeder
Ressort à diaphragme pour embrayage

(30) Priority: 16.07.1993 JP 17682493
(43) Date of publication of application: 25.01.1995
(73) Proprietor: AISIN SEIKI KABUSHIKI KAISHA, Kariya City Aichi Pref. (JP)
(72) Inventor: Saeki, Tomohiro, Kariya City, Aichi pref. (JP); Hibi, Katsuyuki, Kariya City, Aichi pref. (JP)
(74) Representative: Pellmann, Hans-Bernd, Dipl.-Ing.

(56) References cited:
- DE-A- 3 528 660
- US-A- 4 126 216
- US-A- 4 492 293

## Description

### Field of the Invention

The present invention relates to a clutch diaphragm spring.

### Description of the Related Art

One example of a conventional clutch diaphragm spring is disclosed in Japanese Utility Model application laid-open No. Sho 62-140226. This spring is attached to a clutch cover so as to press a pressure plate and abut a clutch release bearing. This spring has a peripheral part adapted to be attached to the clutch cover and a plurality of leg parts extending radially from the peripheral part toward a center thereof. The peripheral part presses the pressure plate while the plurality of leg parts abut the clutch release bearing. And vibration-damping members are respectively secured to the leg parts. The vibrations of the leg parts caused by drag friction between the clutch diaphragm spring and the clutch release bearing have been conventionally damped by these vibration-damping members.

The above-described conventional clutch diaphragm spring, however, has the defects that the production costs become expensive due to the addition of the vibration-damping members, and also there is a limit to the vibration-damping ability thereof. As a result, vibrations undamped by the vibration-damping members resonate with adjacent leg parts to generate loud noises.

A clutch diaphragm spring according to the preamble of claims 1 and 2 is known from US 4 126 216. This spring may be attached to a clutch cover for pressing a pressure plate of the clutch and abutting against a clutch release bearing. A peripheral part of this spring is adapted for pressing the pressure plate and further a plurality of leg parts are provided which are adapted to abut against the clutch release bearing, wherein these leg parts extend radially from the peripheral part towards an axial center thereof. According to one embodiment, there are provided leg parts having different configurations which show different resonance frequencies.

### SUMMARY OF THE INVENTION

Accordingly, it is an object of the present invention to provide a clutch diaphragm spring easy to manufacture by which vibrations generated in leg parts are prevented from resonating with their adjacent leg parts. This object is solved by the features of claims 1 and 2.

The clutch diaphragm spring in accordance with the present invention has leg parts of such configurations as to make resonance frequencies thereof different from each other. Such configurations are realized by partially cutting away one kind of leg parts to make the mass thereof different from that of another kind of leg parts adjacent to one kind of leg parts, or by partially cutting away root portions of one kind of leg parts.

When vibrations are generated in the leg parts of the clutch diaphragm spring of the present invention, such vibrations do not resonate with their adjacent leg parts so as not to be transmitted to other leg parts in the amplified state. Accordingly, resultant noises can be reduced.

Other features and characteristics of the present invention will become apparent upon consideration of the following description and the appended claims with reference to the accompanying drawings, all of which form a part of this specification.

### BRIEF DESCRIPTION OF THE DRAWINGS

FIG. 1 is a front elevation view of a clutch device to which a clutch diaphragm spring in accordance with the present invention is applied;
FIG. 2 is an axial sectional view of the clutch device shown in FIG. 1;
FIG. 3 is an enlarged front elevation view of a main portion of a modified embodiment of a clutch diaphragm spring in accordance with the present invention;
FIG. 4 is an enlarged front elevation view of a main portion of another modified embodiment of a clutch diaphragm spring in accordance with the present invention; and
FIG. 5 is an enlarged front elevation view of a broken away portion of still another modified embodiment of a clutch diaphragm spring in accordance with the present invention.

### DETAILED DESCRIPTION OF THE PREFERRED EMBODIMENTS

Hereinafter, embodiments of the present invention will be explained with reference to the appended drawings.

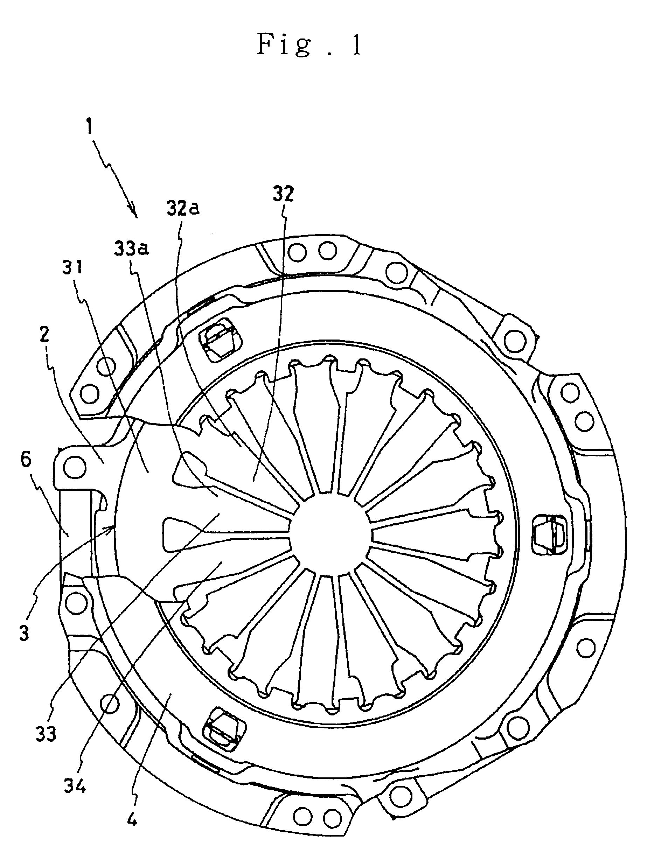

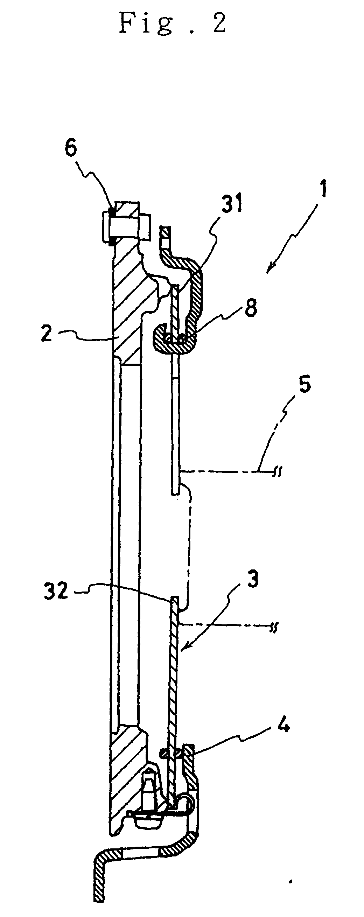

As shown in FIGS. 1 and 2, a clutch device 1 has a pressure plate 2 for engaging or disengaging a clutch disc (not shown) on the side of an output shaft (not shown) and a flywheel (not shown) on the side of an input shaft (not shown), a clutch diaphragm spring 3 for pressing the pressure plate 2, a clutch cover 4 for accommodating these pressure plate 2 and clutch diaphragm spring 3, and a clutch release bearing 5 for releasing the clutch diaphragm spring 3 from the pressing state. The clutch cover 4 is secured to the flywheel, and the pressure plate 2 is supported by the clutch cover 4 with a strap 6 so as to move in the axial direction thereof. The clutch diaphragm spring 3 is attached to the clutch cover 4 and displaceably supported thereby on a pivot ring 8 which serves as a fulcrum. The clutch release bearing 5 is disposed on the output shaft so as to move in the axial direction thereof and abuts the clutch diaphragm spring 3.

In FIG. 1, the clutch diaphragm spring 3 is composed of a peripheral part 31 and a plurality of leg parts 32, 33 and 34 which respectively extend radially from the peripheral part 31 toward a center thereof. The clutch diaphragm spring 3 presses the pressure plate 2 at a peripheral edge of the peripheral part 31 and abuts the clutch release bearing 5 at distal ends of the leg parts 32, 33 and 34.

The leg parts 32 and 33 respectively have protrusions 32a and 33a on both sides thereof. The protruding amount of the protrusions 33a is less than that of the protrusions 32a. In contrast, the leg part 34 is defined by generally straight side faces without any protrusion. The difference in configuration of the adjacent leg parts causes the leg parts 32, 33 and 34 to have different masses and different resonance frequencies from each other. These leg parts 32, 33 and 34 compose one set of leg parts, and five sets of leg parts are equally spaced in the circumferential direction of the clutch diaphragm spring 3.

When vibrations are generated in any one of the leg parts 32, 33 and 34 due to drag friction between the clutch diaphragm spring 3 and the clutch release bearing 5, such vibrations do not resonate with adjacent leg parts thereof, because the leg parts 32, 33 and 34 have different resonance frequencies from each other, whereby such vibrations are prevented from being transmitted to the other leg parts in the amplified state. As a result, noises caused by drag friction between the clutch diaphragm spring 3 and the clutch release bearing 5 can be reduced. Furthermore, no vibration-damping members used to reduce noises, so the production costs are decreased.

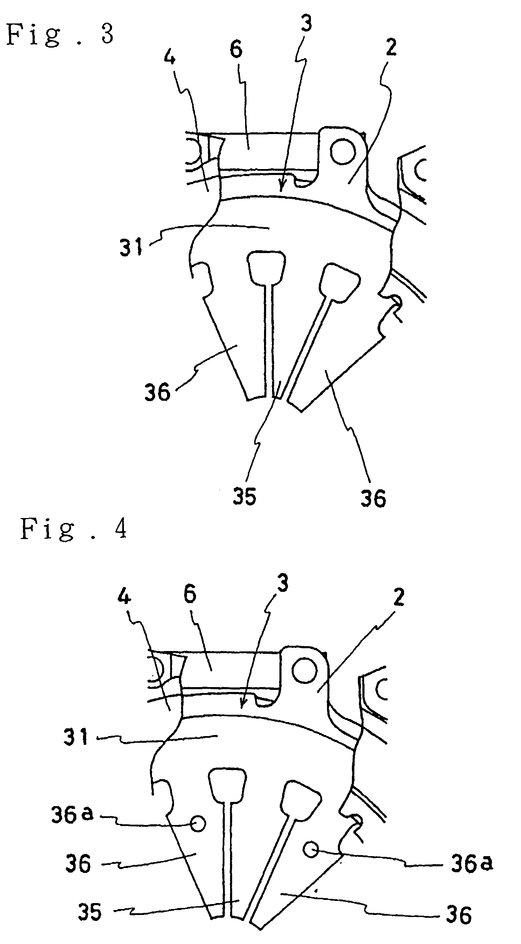

FIG. 3 shows a main portion of a modified embodiment of a clutch diaphragm spring. As shown, leg parts 35 and 36 respectively have a tapered configuration, and the width of a distal end of the leg part 35 is less than that of its adjacent leg parts 36. And FIG. 4 shows a main portion of another modified embodiment of a clutch diaphragm spring. As shown, a hole 36a is formed in only each leg part 36. The remaining configurations of the leg parts 35 and 36 are identical to each other. Thus, in the clutch diaphragm springs shown in FIGS. 3 and 4, the masses of these leg parts are made different from each other to provide different resonance frequencies from each other.

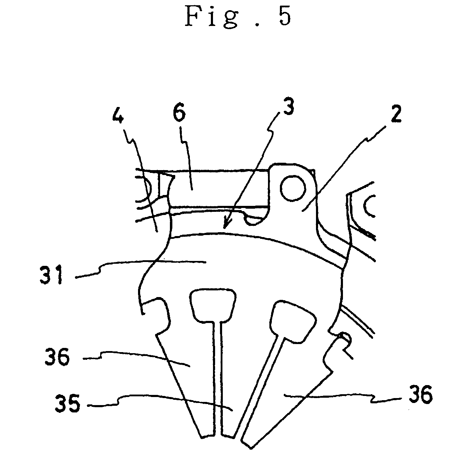

FIG. 5 shows a main portion of a still another modified embodiment of a clutch diaphragm spring. As shown, the leg part 35 has the configuration that the width of the root portion thereof is greater than that of the leg parts 36. The remaining configurations of the leg parts 35 and 36 are identical to each other. By increasing the width of the root portion of only the leg parts 35, the stiffness of the leg parts 35 and 36 are made different from each other.

The clutch diaphragm spring in accordance with the present invention is formed by punching a spring steel plate. The punching work can be easily performed by using blades having the configurations conforming to those of the leg parts 31 through 36.

With the present invention, as the adjacent leg parts have such configurations as to make the resonance frequencies thereof different from each other, in the case where vibrations are generated in any one of leg parts, such vibrations do not resonate with adjacent leg parts, and accordingly, such vibrations are prevented from being transmitted to the other leg parts in the amplified state, whereby noises caused by drag friction between the clutch diaphragm spring and the clutch release bearing can be effectively reduced. Furthermore, as the clutch diaphragm spring of the present invention does not require any vibration-damping member, the production costs are decreased and the work efficiency is improved.

## Claims

1. A clutch diaphragm spring (3) to be attached to a clutch cover (4) for pressing a pressure plate (2) and abutting against a clutch release bearing (5), comprising:
a peripheral part (31) adapted for pressing the pressure plate (2) attached to the clutch cover (4); and
a plurality of leg parts (32, 33, 34) adapted to abut against the clutch release bearing (5), said plurality of leg parts (33, 34; 35, 36) extending radially from the peripheral part (31) towards an axial center thereof, wherein
said plurality of leg parts have such configurations as to make resonance frequencies of adjacent leg parts (32, 33, 34) different from each other,
**characterized in that**
one kind of leg parts (33; 35) out of said plurality of leg parts (32, 33, 34) are partially cut away to make the mass of said one kind of leg parts (33; 35) different from that of another kind of leg parts (34; 36) adjacent to said one kind of leg parts (33; 35), wherein said cut away portions lie within the area of the leg parts (32, 33, 34).

2. A clutch diaphragm spring (3) to be attached to a clutch cover (4) for pressing a pressure plate (2) and abutting against a clutch release bearing (5), comprising:
a peripheral part (31) adapted for pressing the pressure plate (2) attached to the clutch cover (4); and
a plurality of leg parts (32, 33, 34) adapted to abut against the clutch release bearing (5), said plurality of leg parts (33, 34; 35, 36) extending radially from the peripheral part (31) towards an axial center thereof, wherein
said plurality of leg parts have such configurations as to make resonance frequencies of adjacent leg parts (32, 33, 34) different from each other,
**characterized in that**
root portions of one kind of leg parts (33; 35) out of said plurality of leg parts are partially cut away to make the stiffness of said one kind of leg parts (33; 35) different from another kind of leg parts (34; 36) adjacent to said one kind of leg parts (33, 35), wherein the width of the cut away portions is varied to achieve different widths of the remaining root portions in circumferential direction.

3. The clutch diaphragm spring according to claim 1 or 2, wherein said plurality of leg parts (32, 33, 34) are composed of at least three kinds of leg parts having different configurations.

## Patentansprüche

1. Kupplungstellerfeder (3), die zum Drücken einer Druckplatte (2) und zum Anliegen gegen ein Kupplungsführungslager (5) an einem Kupplungsdeckel (4) anzubringen ist, mit:
einem Umfangsstück (31), das dazu angepaßt ist, die an dem Kupplungsdeckel (4) angebrachte Druckplatte (2) zu drücken; und
einer Vielzahl von Schenkelstücken (32, 33, 34), die dazu angepaßt sind, gegen das Kupplungsführungslager (5) anzuliegen, wobei sich die Vielzahl von Schenkelstücken (33, 34; 35, 36) radial von dem Umfangsstück (31) zu einer axialen Mitte davon erstreckt, wobei
die Vielzahl von Schenkelstücken derartige Gestalten hat, um Resonanzfrequenzen von benachbarten Schenkelstücken (32, 33, 34) voneinander verschieden zu machen,
**dadurch gekennzeichnet, daß**
eine Art von Schenkelstücken (33; 35) aus der Vielzahl von Schenkelstücken (32, 33, 34) teilweise weggeschnitten ist, um die Masse der einen Art von Schenkelstücken (33; 35) verschieden von der einer anderen Art von Schenkelstücken (34; 36) zu machen, die zu der einen Art von Schenkelstücken (33; 35) benachbart sind, wobei die weggeschnittenen Abschnitte innerhalb des Gebiets der Schenkelstücke (32, 33, 34) liegen.

2. Kupplungstellerfeder (3), die zum Drücken einer Druckplatte (2) und zum Anliegen gegen ein Kupplungsführungslager (5) an einem Kupplungsdeckel (4) anzubringen ist, mit:
einem Umfangsstück (31), das dazu angepaßt ist, die an dem Kupplungsdeckel (4) angebrachte Druckplatte (2) zu drücken; und
einer Vielzahl von Schenkelstücken (32, 33, 34), die dazu angepaßt sind, gegen das Kupplungsführungslager (5) anzuliegen, wobei sich die Vielzahl von Schenkelstücken (33, 34; 35, 36) radial von dem Umfangsstück (31) zu einer axialen Mitte davon erstreckt, wobei
die Vielzahl von Schenkelstücken derartige Gestalten hat, um Resonanzfrequenzen von benachbarten Schenkelstücken (32, 33, 34) voneinander verschieden zu machen,
**dadurch gekennzeichnet, daß**
Fußabschnitte von einer Art von Schenkelstücken (33; 35) aus der Vielzahl von Schenkelstücken teilweise weggeschnitten sind, um die Steifigkeit der einen Art von Schenkelstücken (33; 35) verschieden von einer anderen Art von Schenkelstücken (34; 36) zu machen, die zu der einen Art von Schenkelstücken (33, 35) benachbart sind, wobei die Breite der weggeschnittenen Abschnitte variiert ist, um verschiedene Breiten der verbleibenden Fußabschnitte in einer Umfangsrichtung zu erzielen.

3. Kupplungstellerfeder nach Anspruch 1 oder 2, wobei die Vielzahl von Schenkelstücken (32, 33, 34) aus zumindest drei Arten von Schenkelstücken mit verschiedenen Gestalten besteht.

## Revendications

1. Ressort à diaphragme d'embrayage (3) à fixer à un plateau de fermeture d'embrayage (4) pour presser une plaque d'appui (2), et butant contre un palier guide d'embrayage (5), comportant:
une partie périphérique (31) conçue pour presser la plaque d'appui (2) fixée au plateau de fermeture d'embrayage (4); et
une pluralité de parties de patte (32, 33, 34) conçues pour s'appuyer contre le palier guide d'embrayage (5), ladite pluralité de parties de patte (33, 34 ; 35, 36) s'étendant radialement de la partie périphérique (31) vers le centre axial dudit ressort à diaphragme d'embrayage, dans laquelle
ladite pluralité de parties de patte ont des configurations telles qu'elles rendent les fréquences de résonance des parties de patte adjacentes (32, 33, 34) différentes les unes des autres,
**caractérisé en ce que**
une sorte de parties de patte (33; 35) parmi la pluralité de parties de patte (32, 33, 34), sont partiellement découpées pour rendre la masse de ladite sorte de parties de patte (33 ; 35) différente de celle d'une autre sorte de parties de patte (33; 35), dans lesquelles lesdites parties découpées se situent à l'intérieur de la zone des parties de patte (32, 33, 34).

2. Ressort à diaphragme d'embrayage (3) à fixer à un plateau de fermeture d'embrayage (4) pour presser une plaque d'appui (2), et butant contre un palier guide d'embrayage (5), comportant :
une partie périphérique (31) conçue pour presser la plaque d'appui (2) fixée au plateau de fermeture d'embrayage (4); et
une pluralité de parties de patte (32, 33, 34) conçues pour s'appuyer contre le palier guide d'embrayage (5), ladite pluralité de parties de patte (33, 34 ; 35, 36) s'étendant radialement de la partie périphérique (31) vers le centre axial dudit ressort à diaphragme d'embrayage, dans laquelle
ladite pluralité de parties de patte ont des configurations telles qu'elles rendent les fréquences de résonance des parties de patte adjacentes (32, 33, 34) différentes les unes des autres,
**caractérisé en ce que**
des parties de base d'une sorte de parties de patte (33; 35) parmi ladite pluralité de parties de patte, sont partiellement découpées pour rendre la rigidité de ladite sorte de parties de patte (33 ; 35) différente de celle d'une autre sorte de parties de patte (34; 36) adjacentes à ladite sorte de parties de patte (33, 35), dans lesquelles la largeur des parties découpées varie pour obtenir différentes largeurs des parties de base restantes dans la direction circonférentielle.

3. Ressort à diaphragme d'embrayage (3) selon la revendication 1 ou 2, dans lequel ladite pluralité de parties de patte (32, 33, 34) est composée d'au moins trois sortes de parties de patte ayant différentes configurations.
